# EUROPEAN PATENT APPLICATION

(11) **EP 4 273 197 A1**
(43) Date of publication of application: **08.11.2023**
(21) Application number: 22171256.5
(22) Date of filing: 03.05.2022
(51) Int. Cl.: C09D 5/00

(54) **GRANULAR COMPOSITION CONTAINING GRAPHENE AND A PARTICULATE MATERIAL, AND METHOD FOR PRODUCING IT**

(71) Applicant: Directa Plus S.p.A., 22074 Lomazzo (CO) (IT)
(72) Inventor: BROGGI, Giovanni, 20121 Corso di Porta Nuova 24 - Milano (IT)
(74) Representative: Zanoli, Enrico

(57) **Abstract**

Granular composition comprising a particulate material selected from pigments and fillers, graphene nano-platelets and a binder, and use of this composition to prepare paints, varnishes and inks.

## Description

The present invention relates to a granular composition containing graphene, a particulate material and a binder, and to method for producing said granular composition. The invention relates also to a dispersion of the granular composition in a liquid medium, and to the use of said dispersion in several industrial applications.

### Background of the invention

Many chemical compounds, or substances, are available in the form of solid particulate material, and must be processed in granular or powder form to produce liquid dispersions, or pastes, depending on the amount of liquid which is used. These dispersions, or pastes, are used as such in a number of applications, or can be further processed to obtain the desired final product, or article. For example, if the substance is a pigment, it can be used as such or dispersed in a liquid to colour a paint, a varnish, an ink, or the like.

Solid particulate materials typically do not have a controlled particle size and/or shape, as it would be desirable for safety and environmental considerations, as well as for a better quality of the product.

Furthermore, solid particulate materials are often combined with additives that perform a desired function, e.g., binders or wetting and dispersing agents, which help the formation and maintenance of a granular form, and/or of the formation and stability of the dispersion of the granules in a liquid. Other additives interact with the particulate material to improve its performance in desired applications. For example, additives that improve the mechanical resistance of the material, or its resistance to fire or light, are often used.

Certain known granular compositions containing materials of interest, e.g., pigments to be used to produce paints, however, do not provide optimum performance in terms of resistance to corrosion, resistance to fire in applications of wood coating, mechanical resistance, impermeability, and more generally, in terms of barrier properties.

Pigments and fillers are particulate materials with a very irregular surface, which varies from compound to compound, and are typically combined with other completely different substances, e.g., carrier systems.

Furthermore, many materials, including pigments, besides having an irregular shape, have often a small particle size, either naturally or as a result of milling. The smaller the particle, the greater is its surface energy, and the more likely is that the particles agglomerate during manufacturing or processing, resulting in agglomerates having an uncontrolled size and shape.

Both the irregular shape and the small size of the particles can cause difficulties during processing, may pose risks to human health and may adversely affect the quality of the end product.

The difficulties of dosing, handling and integrating pigments and fillers in the carrier systems are well known. For example, in the formulations of liquid paints, the incorporation of pigments and fillers is typically carried out by mixing them with dissolved resins in solvent-born or water-born systems.

The presence of a solvent tends to make the contact between resin and pigments or fillers unstable, due to its flocculating properties. This instability causes the primary pigment particles to re-aggregate. This phenomenon is commonly referred to as "flocculation".

To reduce instability and avoid flocculation, wetting agents and dispersing additives, e.g., binders, are added.

Binders have a two-fold function: reducing the surface tension between the primary pigment particles, which are thus disaggregated, and stabilizing them, thus avoiding re-aggregation phenomena.

Conventional production processes of painting systems include grinding techniques with multiple treatments in the mill of single pigment pastes lasting several hours, in which the pigment is integrated in suitable resins.

However, one of the main limitations to the use of traditional pigment compositions in solid form, in which pigment particles have been coated with amorphous resins having a low glass transition temperature (Tg), such as aldehyde, ketone or acrylic resins, is the phenomenon of sticking, which occurs at temperatures above 40°C.

It must also be noted that prior art embodiments do not provide a satisfactory solution to the problem of preparing liquid dispersions of materials in granular form either in water or in organic solvent, as the material typically requires to be designed or adapted for the specific dispersion, i.e., the prior art granular materials are not suitable for a so-called "universal" use, as it would be desirable.

Furthermore, the prior art embodiments do not provide an optimal solution to the problem of providing a manufacturing process for the materials in granular form that is relatively simple, safe and environmentally friendly.

### Summary of the invention

Therefore, an object of the present invention is to provide a granular composition comprising a particulate material and one or more additive which improve the performance of the composition, in which the granular composition has a substantially regular and controlled form, and that can be dispersed in water or in an organic solvent without the need of prior adaptation to the specific type of dispersion, namely, that is suitable to be used as such in water-based and solvent-based dispersions.

Another object of the present invention is to provide a method for preparing a granular composition comprising a particulate material and one or more additives, which is simple, effective and which is "grinding free", i.e., that does not require one or more grinding steps in a mill, thus drastically reducing processing times.

A further object of the invention is to provide a dispersion of a granular composition comprising a particulate material and one or more additives, in water or in an organic solvent. Therefore, an aspect of the present invention concerns a granular composition comprising:
a) from 20 to 95% by weight of a particulate material selected from pigments and fillers;
b) from 0.02 to 50% by weight of graphene nano-platelets;
c) from 0.5 to 60% by weight of a binder;
wherein at least 90% of said graphene nano-platelets have a lateral dimension (x, y) from 50 to 20000 nm and a thickness (z) from 1 to 50 nm and a C/O ratio ≥ 40:1.

According to another aspect, the invention concerns a method for the preparation of a granular composition comprising:
a) from 20 to 95% by weight of a particulate material selected from pigments and fillers;
b) from 0.02 to 50% by weight of graphene nano-platelets having a lateral dimension (x, y) from 50 to 20000 nm, a thickness (z) from 1 to 50 nm, and a C/O ratio ≥ 40:1;
c) from 0.5 to 60% by weight of a binder;
wherein said particulate material, said graphene nano-platelets and said binder are mixed in a turbomixer apparatus provided with an impeller with blades rotating at a peripheral speed from 4 to 50 m/s, said method being carried out at a temperature from 20 to 150°C. According to another aspect, the invention concerns a dispersion of the granular composition defined above in a liquid selected from water and an organic solvent.

### Brief description of the drawings

The invention is described below also with reference to the accompanying drawings, wherein:

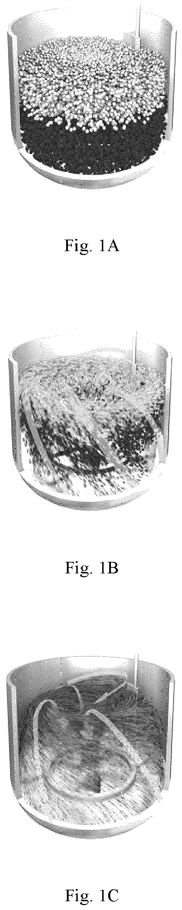

- Figures 1A, 1B and 1C are schematic views of the inside of an apparatus to perform the method for the preparation of a granular composition according to the invention, at different operating conditions; and

### Description of the invention

According to the present description, the term "particulate material" designates a pigment or a filler in the form of solid particles or of powder, to be used in the production of paints, either water-born or solvent-born.

According to the present invention, pigments and fillers are substances or compounds which absorb a part or all of the spectrum of the light and reflect the complementary part thereof, forming visible colours.

According to the invention, a particulate material as defined above is combined with graphene nano-platelets and a binder, and optionally with other additives, and made available as a composition in granular form, suitable to be further processed to obtain a desired final product, e.g., a liquid dispersion.

The particulate material is thus a material which, when combined with graphene and made available in granular form in the presence of a binder, exhibits advantageous properties over the particulate material alone, or it is easier to process or use. In applications of surface coating and paints, the combination of pigment and/or filler and graphene represents the active component of the composition in granular form.

According to the present invention, the binder is a wetting and dispersing agent that lowers the interfacial tension between the particulate material and the graphene nano-platelets, as well as and the interfacial tension between the granular composition and a liquid, either water or organic solvent, in which the granular composition is dispersed.

The granular composition of the invention comprises granules having a particle size of from 50 to 4000 µm, measured with a Digital Electromagnetic Sieve Shaker Filtra^{®} Vibration mod. FTL0200.

In the present description, the term "particle size" means a value indicating the mean particle size, namely the volume-based particle size of the particles in form of agglomerates or clusters, herein defined as "granules".

The volume-based particle size equals the diameter of the ideal sphere that fully comprises a given particle. In particular, when sieve analysis is used, the diameter of the ideal sphere corresponds to the mesh size of the sieve. The volume-based particle size is measured with a Digital Electromagnetic Sieve Shaker of Filtra Vibration mod. FTL 0200.

According to an aspect of the invention, the granular composition comprises granules having a size of from 100 to 3000 µm, measured with a Digital Electromagnetic Sieve Shaker Filtra^{®} Vibration mod. FTL0200.

According to an aspect of the invention, the granular composition comprises granules having a size of from 500 to 2000 µm, measured with a Digital Electromagnetic Sieve Shaker Filtra^{®} Vibration mod. FTL0200.

According to an aspect of the invention, the granular composition is essentially free of solid particulate material having a nanometric size, in particular is free of solid particulate material having a size of less than 10 µm, which would generate dusts and create environmental concerns, wherein the term "free" means that the solid particulate material having a size of less than 10 µm is absent or is present in an amount of up to 5% by weight.

In its more general aspect, the present invention relates to a composition in granular form comprising graphene, one or more pigments and / or fillers, one or more binders and possibly a further additive to provide improved performances in applications of anti-corrosion paints and anti-fire paints.

The pigment that forms the particulate material of the invention can be an inorganic metal-based pigment, such as chrome pigments, iron oxide pigments or copper pigments, these pigments being coloured pigments, or such as titanium pigments, which can be coloured or white pigments.

The pigment can also be an organic pigment, which can be an entirely natural pigment or which can have a natural origin, i.e., it is a semisynthetic or a synthetic organic pigment. Preferably, the solid particulate material is an inorganic pigment.

Concerning the colour, the following pigments can be used:
- yellow pigments such as PY 184; PY 138; PY 139; PY 42; PY 216; PY 74; PY 109; PY 119; PY 83; PY 65; PY 151; PY 53; PY 110; PY 3; PY 154; PY 150; PY 17; PY 13; PY 14; PY 216; PY 199; PY 128; PY 109; PY 168;
- orange pigments such as PO 73; PO 34; PO 36; PO 13; PO 61; PO 71; PO 64; PO 16; PO 83; PO 62; PO 180;
- red pigments such as P.Red 101; P.Red 254; P.Red 122; P.Red 177; P.Red 179; P.Red 170; P.Red 23; P.Red 202; P.Red 146; P.Red 168; P.Red 166; P.Red 112; P.Red 207; P.Red 185; P.Red 60; P.Red 38; P.Red 214; P.Red 144; P.Red 255;
- violet pigments such as PV 19; PV 23; PV 37;
- blue pigments such as PB 15:0; PB 15:1; PB 15:2; PB 15:3; PB 15:4; PB 60; PB 28;
- green pigments such as PG 7; PG 17; PG 36;
- brown pigments such as P. Brown 24;
- black pigments such as P. Black 6; P. Black 7; P. Black 11.

According to another aspect of the present invention, the solid particulate material is a filler. Preferably, the filler is selected from the group consisting of calcium carbonate, kaolin, mica, talc, silica, more preferably pyrogenic silica, barium sulphate, and any combination thereof. According to an aspect of the invention, the filler is calcium carbonate.

According to an aspect of the invention, the granular composition comprises:
a) from 20 to 95% by weight of a particulate material selected from pigments and fillers;
b) from 0.02 to 50% by weight of graphene nano-platelets;
c) from 0.5 to 60% by weight of a binder;
wherein at least 90% of said graphene nano-platelets have a lateral dimension (x, y) from 50 to 20000 nm and a thickness (z) from 1 to 50 nm and a C/O ratio ≥ 40:1.

Preferably, the granular composition comprises:
a) from 30 to 90% by weight of a particulate material selected from pigments and fillers;
b) from 0.05 to 40% by weight of graphene nano-platelets;
c) from 1.0 to 58% by weight of a binder.

According to an aspect of the invention, at least 90% of said graphene nano-platelets have a lateral dimension (x, y) from 80 to 15000 nm.

According to an aspect of the invention, at least 90% of said graphene nano-platelets have a thickness (z) from 3 to 20 nm.

According to an aspect of the invention, at least 90% of the graphene nano-platelets have a C/O ratio ≥ 45:1.

According to an aspect of the invention, at least 90% of the graphene nano-platelets have a lateral dimension (x, y) from 100 to 10000 nm.

According to an aspect of the invention, at least 90% of the graphene nano-platelets have a thickness (z) from 5 to 15 nm.

According to an aspect of the invention, at least 90% of the graphene nano-platelets have a C/O ratio ≥ 50:1.

In the present description, the dimension of the graphene nanoplatelets is defined with reference to a system of Cartesian axes x, y, z, it being understood that the particles are substantially flat platelets but can also have an irregular shape. In any case, the lateral dimension and the thickness provided with reference to the directions x, y and z must be intended as the maximum dimensions in each of the aforesaid directions.

The structural characterization of graphene can be made with the test method ISO/TS 21356-1, 202103.

The structural characterization of graphene incorporated in the composition of the invention can be made by separating the graphene from the particulate material, i.e., the pigment or filler, and from the binder, as well as from any other component of the composition, with methods known to a skilled person. A suitable method comprises a first step of removing the binder by repeated washings with water, then separating the particulate material from graphene by centrifugation.

According to the invention, graphene in the form of nanoplatelets (GNPs), is used as an additive both in the paint sector and in that of polymers (thermoplastics and elastomers). The incorporation of graphene gives the particulate material unique characteristics such as: increase in corrosion resistance, increase in anti-fire resistance (wood coating), greater mechanical resistance, increase in barrier properties, greater impermeability, increase in thermal and electrical conductivity, antibacterial and antifouling.

The present invention guarantees greater dispersibility of graphene within different types of resins, also increasing the ease of incorporation into the particulate. Furthermore, the quality of the dispersion is improved by using a preparation that already incorporates the dispersant inside it, compared to the use of graphene as it is and the use of a separate dispersant. Graphene is a material consisting of a monatomic layer of hybridized carbon atoms in the form sp². Therefore, they are arranged in close-packed, highly crystalline and regular hexagonal honeycomb structures.

Several methods for the preparation of graphene are known from the scientific and patent literature, such as chemical vapor deposition, epitaxial growth, chemical exfoliation and chemical reduction of the oxidized form of graphene oxide (GO).

The Applicant Directa Plus S.p.A. is the owner of patents and patent applications relating to methods for producing structures comprising layers of graphene, such as EP 2 038 209 B1, EP 3 157 864 B1 and 3 157 865 B1. The last two patents describe methods for producing dispersions of high purity graphene, from which it is possible to obtain graphene nano-platelets with the dimensions required for the implementation of the present invention.

A highly pure graphene, i.e., with a C/O ratio ≥ 40 and having the dimensional features defined above is produced and marketed by Directa Plus S.p.A. with the brand name G+^{®}.

The C/O ratio in the graphene used in the composition according to the invention is determined by means of elemental analysis performed by elemental analyzer (CHNS O), which provides the weight percentage of the various elements. By normalizing the values obtained with respect to the atomic weight of the C and O species and finding their ratio, the C/O ratio is obtained.

When a more accurate determination is necessary, the C/O ratio is determined by using the Transmission Electron Microscopy (TEM) combined with the Energy-Dispersive X-ray Spectroscopy (TEM-EDX, also called TEM-EDS). This is a combination of two effective techniques, as with TEM, the microscopic surface structures of the sample can be seen with high precision and more closely than with a traditional light microscope. A scanning electron microscope can have a resolution less than 1 nm, which is much higher than a light microscope has. Therefore, a more high-quality and accurate image of the sample's surface topography is obtained. Alternatively, SEM can be replaced by TEM, i.e., Transmission Electron Microscopy.

When the elemental composition of the sample is to be determined, an EDX detector is attached to the TEM apparatus. An EDX detector identifies the elements in the sample along with determining their concentrations and distribution. This allows an accurate determination of C and O.

A preliminary separation of graphene from the other components of the composition is necessary, as indicated above for the structural characterization graphene.

According to embodiments described in the above-mentioned patent documents, the process for producing graphene is carried out continuously, by continuously feeding the graphite flakes to the high temperature expansion step, continuously discharging the so-obtained expanded graphite in an aqueous medium and continuously subjecting the expanded graphite dispersed in the aqueous medium to exfoliation and size reduction treatment carried out with the methods of ultrasonication and/or homogenization at high pressure.

As described in these patent documents, the final dispersion of the graphene nano-platelets obtained can be concentrated or dried, depending on the final form required for the graphene. The object of drying the dispersion is to obtain a dry powder that is easily redispersible in various matrices, both solvents and polymers, where liquid is not desirable or manageable at process level, or where water cannot be used due to chemical incompatibility.

A significant advantage of the production processes described in the patent documents mentioned above is the possibility of operating without using surfactants. In fact, the graphene nano-platelets thus obtained can be highly pure, both due to the high C/O ratio and due to the absence of foreign substances that could contaminate them, such as surfactants. In fact, it has been seen that the absence of surfactants allows graphene having an electrical conductivity substantially higher than the graphene obtained with processes that use surfactants to be obtained. This improves the performance of the graphene in many applications.

The graphene nano-platelets having the lateral dimension, the thickness (z) and the C/O ratio defined above have a high electrical conductivity.

The binder of the granular composition of the invention is a wetting and dispersing agent selected from the group consisting of:
Polyurethane oligomers and polyurethane polymers having a content of modified polyurethane of 100%;
Non-ionic surfactants, including fatty acids ethoxylates, alcohol ethoxhylates and ethoxylated sorbitan esters, preferably not containing alkylphenol ethoxylates (APEO) and volatile organic compounds (VOC), including sorbitan monooleate;
Anionic surfactants, preferably not containing alkylphenol ethoxylates (APEO) and volatile organic compounds (VOC); including sodium polynaphthylmethane sulphonate, polymers with oxirane, sodium polyphosphates, sodium salts of polyacrylic acid;
Phosphoric acid esters and their salts, including 6 EO and 9 EO tridecyl phosphoric esters;
Aldehyde and ketone resins;
Epoxidized soybean oils;
Polyethers modified with ester groups of phosphoric acid and their salts;
Polyesters modified with fatty acids;
Polymers and copolymers with pigment-affinic groups, including modified polyether with groups of high pigment affinity;
2,5-Furandione, telomer with 1,1'-(1,1-dimethyl-3-methylene-1,3-propanediyl)bis(benzene) and ethenylbenzene, 3-(dimethylamino)propyl imide, imide with polyethylenepolypropylene glycol 2-aminopropyl Me ether, 2-[(C10-16-alkyloxy)methyl]oxirane-quaternized, benzoates (salts);
Sodium polycarboxylate;
Mixture of 5-chloro-2-methyl-2H-isothiazol-3-one with 2-methyl-2H-isothiazol-3-one (CAS N° 55965-84-9).

Concerning the non-ionic, APEO- and VOC-free surfactants, they have preferably a pH of 5-7 and a viscosity up to 100s, this latter measured according to DIN EN ISO 2431, flow cup 6 mm, 23°C.

Concerning the aldehyde and ketone resins, examples are the products distributed by BASF such as Laropal^{®}, having an average molecular weight of between 800 and 2000 Da and melting point of between 70° and 130°C.

Concerning the copolymers with pigment-affinic groups, examples are the products commercialized with the trademark Byk 2055 by BYK-Chemie.

Concerning the alkylphenol-free, nonionic wetting agent and emulsifier, examples are the products commercialized with the trademark Nuosperse FN265 by Elementis.

The classes of binders disclosed above have a high affinity toward the pigments, the fillers and the graphene that form the granular composition of the invention. They ensure a stabilization of the particles of pigment, filler and the graphene nano-platelets that form the composition, thereby stabilizing also the granules of the composition. Furthermore, the binder stabilizes the dispersion of the granules in the composition.

The granular composition according to the invention can be prepared by mixing the components in a turbomixer apparatus.

The turbomixer apparatus is high shear granulator comprising a cylindrical vessel having at least one inlet opening and at least one discharge opening, optionally a heating and/or cooling jacket to bring and/or keep the temperature inside the vessel to a predetermined temperature. In the chamber within the vessel a rotating shaft bearing at least one impeller provided with blades is mounted. The vessel is closed by a top cover. A schematic, partial representation of this apparatus is shown in Figures 1A, 1B and 1C, which do not show the top cover.

The particulate material, the graphene nano-platelets and the binder are fed to the turbomixer apparatus, as shown in Fig. 1A. The impeller is rotated so that the blades reach a peripheral speed from 4 to 50 m/s. The mixing is carried out at a temperature from 20 to 150°C.

The apparatus moves the mixture of graphene, binder and pigment and/or filler from the static phase and pushes it to form a vortex similar to that of a tornado which, being enclosed inside a cylindrical chamber, starts to whirl up spiralling from the bottom towards the top of the chamber, as shown by Fig. 1B. The mixture then collapses towards the centre of the chamber by effect of gravity, and because of the barrier offered by the top cover, as shown by Fig. 1C, the mixture goes down towards the lower part of the vessel, where it is again pushed up and outwards to form the rising spiral. This effect creates the vortex that ensures mixing and agglomeration of the particles, thus allowing the formation of dust free, free-flowing granules. The presence of impellers that cut the flow of the vortex and counteract the advancement of the particles ensures the dispersion of any micro-aggregates, thereby providing an optimal dispersion of graphene as well as its homogeneous distribution within the granule. The mechanical energy of mixing/agglomeration is transformed into thermal energy due to the action of revolution and cutting exerted by the vortex.

Preferably, the rotating shaft comprises from 1 to 7 impellers, more preferably 4 impellers, mounted in series on said rotating shaft.

Preferably, the turbomixer apparatus comprises a heating and/or cooling jacket to control the temperature of the chamber in which the components are mixed.

Preferably the temperature is comprised between 30°C and 150°C, more preferably between 60-120°C.

Preferably, the process is carried out for a total time comprised between 5 and 60 minutes. According to an aspect of the present invention, the binder is introduced into the turbomixer gradually, i.e., it is fed in a continuous way over time.

According to an aspect of the present invention, the preparation of the composition of the invention is carried out in a discontinuous manner, e.g., in a batch mode as opposed to a continuous mode.

According to an aspect of the present invention, the method of preparation of the composition of the invention is carried out without using any solvent, i.e., it is a substantially dry process. With "dry" it is meant that the amount of liquid in the process is not higher than 5% by weight of the entire composition.

In particular, with the term "solvent" it is intended a substance, or a mixture of substances, which is able to dissolve or disperse other substances and which is liquid at room temperature, namely between 20-40°C, for example a nonpolar solvent, a polar aprotic solvent, a polar protic solvent or any mixture thereof, including diluents that do not exert a solubilization of any of the components of the mixture.

According to an aspect, the invention concerns a dispersion of the granular composition defined above in a liquid selected from water and an organic solvent, wherein the term "solvent" has the same meaning as above.

The composition as defined above is suitable to be used as such to produce water-based and solvent-based dispersions. These dispersions, which may also be defined as "pastes" if the amount of liquid is relatively small, are further processed in a number of applications, in particular in application of surface coating, such as the production of paints and the like.

Due to the presence of graphene, the application of such dispersions on substrates, in particular on the surface of non-conductive substrates, gives rise to the formation of a thermally and electrically dispersive coatings, which may improve their performance and quality. Application of the dispersion on such substrates indeed possible to obtain a coating that is substantially electrically and thermally dissipative.

The examples below illustrate some embodiments of the invention and are provided by way of non-limiting example.

### EXAMPLES

The apparatus used to prepare the granular compositions of the invention was a turbomixer having a vessel with a volume of 20L provided with 4 impellers.

The graphene consisted of nano-platelets produced by Directa Plus S.p.A., with the particle size indicated in each example below.

### Example 1

### Preparation of composition CP 701

4450 g of barium sulfate and 6.5 g of graphene Pure G+ of Directa Plus S.p.A. were introduced in the turbomixer described above with 543.5 g of wetting agent Disperbyk 2013 (Byk-Chemie), which is a styrene-maleic anhydride copolymer with quaternized ammonium groups.

The graphene Pure G+ consisted of graphene nano-platelets in which at least 90% (D90) had a lateral size of less than 9905 nm and a thickness of 8 nm. The C/O ratio was 40/1.

The mixture was mixed for 20 minutes at the peripheral speed of 23 m/s at a temperature of 75°C, then a granular composition was discharged with granules having a size of less than 1500 µm, having the following weight content:

| | |
|---|---|
| Barium sulfate (filler): | 89% |
| Graphene nanoplatelets: | 0.13% |
| Binder: | 10.87% |

### Example 2

### Preparation of composition CP 702

4450 g of barium sulfate and 31.5 g of graphene Pure G+ of Directa Plus S.p.A. were introduced in the turbomixer described above with 518.5 g of wetting agent Disperbyk 2013 (Byk-Chemie), which is a styrene-maleic anhydride copolymer with quaternized ammonium groups.

The graphene Pure G+ consisted of graphene nano-platelets in which at least 90% (D90) had a lateral size of less than 9305 nm and a thickness of 14 nm. The C/O ratio was 47/1.

The mixture was mixed for 20 minutes at the peripheral speed of 36 m/s at a temperature of 80°C, then a granular composition was discharged with granules having a size of less than 1000 µm, having the following weight content:

| | |
|---|---|
| Barium sulfate (filler): | 89% |
| Graphene nanoplatelets: | 0.63% |
| Binder: | 10.37% |

### Example 3

### Preparation of composition CP 703

4450 g of barium sulfate and 6.5 g of graphene Pure G+ of Directa Plus S.p.A. were introduced in the turbomixer described above with 543.5 g of wetting agent Disperbyk 2013 (Byk-Chemie), which is a styrene-maleic anhydride copolymer with quaternized ammonium groups.

The graphene Pure G+ consisted of graphene nano-platelets in which at least 90% (D90) had a lateral size of less than 8570 nm and a thickness of 13 nm. The C/O ratio was 50/1.

The mixture was mixed for 20 minutes at the peripheral speed of 36 m/s at a temperature of 75°C, then a granular composition was discharged with granules having a size of less than 1000 µm, having the following weight content:

| | |
|---|---|
| Barium sulfate (filler): | 89% |
| Graphene nanoplatelets: | 0.13% |
| Binder: | 10.87% |

### Example 4

### Preparation of composition CP 704

4450 g of barium sulfate and 31.5 g of graphene Pure G+ of Directa Plus S.p.A. were introduced in the turbomixer described above with 518.5 g of wetting agent Cliqsperse LP2004-1 (CLIQ Swiss Tech.

The graphene Pure G+ consisted of graphene nano-platelets in which at least 90% (D90) had a lateral size of less than 7980 nm and a thickness of 14 nm. The C/O ratio was 60/1.

The mixture was mixed for 20 minutes at the peripheral speed of 36 m/s at a temperature of 80°C, then a granular composition was discharged with granules having a size of less than 1500 µm, having the following weight content:

| | |
|---|---|
| Barium sulfate (filler): | 89% |
| Graphene nanoplatelets: | 0.63% |
| Binder: | 10.37% |

### Example 5

### Preparation of composition CP 705

4300 g of barium sulfate and 150 g of graphene Pure G+ of Directa Plus S.p.A. were introduced in the turbomixer described above with 550 g of wetting agent Cliqsperse LP2004-1 (CLIQ Swiss Tech).

The graphene Pure G+ consisted of graphene nano-platelets in which at least 90% (D90) had a lateral size of less than 7000 nm and a thickness of 20 nm. The C/O ratio was 58/1.

The mixture was mixed for 20 minutes at the peripheral speed of 36 m/s at a temperature of 75°C, then a granular composition was discharged with granules having a size of less than 1500 µm, having the following weight content:

| | |
|---|---|
| Barium sulfate (filler): | 86% |
| Graphene nanoplatelets: | 3% |
| Binder: | 11% |

### Example 6

### Preparation of composition CP 706

2200 g of silica (Syloid 622 of Grace) and 65 g of graphene Pure G+ of Directa Plus S.p.A. were introduced in the turbomixer described above with 2735 g of wetting agent Cliqsperse LP2004-1 (CLIQ Swiss Tech.

The graphene Pure G+ consisted of graphene nano-platelets in which at least 90% (D90) had a lateral size of less than 10000 nm and a thickness of 9 nm. The C/O ratio was 76/1.

The mixture was mixed for 20 minutes at the peripheral speed of 36 m/s at a temperature of 75°C, then a granular composition was discharged with granules having a size of less than 1000 µm, having the following weight content:

| | |
|---|---|
| Silica (filler): | 44% |
| Graphene nanoplatelets: | 1.3% |
| Binder: | 54.7% |

### Example 7

### Preparation of composition CP 707

2450 g of silica (Perkasil of Grace) and 140 g of graphene Pure G+ of Directa Plus S.p.A. were introduced in the turbomixer described above with 2410 g of wetting agent Cliqsperse LP2004-1 (CLIQ Swiss Tech).

The graphene Pure G+ consisted of graphene nano-platelets in which at least 90% (D90) had a lateral size of less than 5000 nm and a thickness of 6 nm. The C/O ratio was 150/1.

The mixture was mixed for 20 minutes at the peripheral speed of 36 m/s at a temperature of 75°C, then a granular composition was discharged with granules having a size of less than 1000 µm, having the following weight content:

| | |
|---|---|
| Silica (filler): | 49% |
| Graphene nanoplatelets: | 2.8% |
| Binder: | 48.2% |

### Example 8

### Preparation of composition CP 708

4600 g of barium sulfate and 250 g of graphene Pure G+ of Directa Plus S.p.A. were introduced in the turbomixer described above with 150 g of wetting agent Disperbyk 2013 (Byk-Chemie), which is a styrene-maleic anhydride copolymer with quaternized ammonium groups.

The graphene Pure G+ consisted of graphene nano-platelets in which at least 90% (D90) had a lateral size of less than 8500 nm and a thickness of 11 nm. The C/O ratio was 93/1.

The mixture was mixed for 20 minutes at the peripheral speed of 36 m/s at a temperature of 97°C, then a granular composition was discharged with granules having a size of less than 150 µm, having the following weight content:

| | |
|---|---|
| Barium sulfate (filler): | 92% |
| Graphene nanoplatelets: | 5% |
| Binder: | 3% |

### Example 9

### Preparation of composition CP 709

4400 g of barium sulfate and 250 g of graphene Pure G+ of Directa Plus S.p.A. were introduced in the turbomixer described above with 350 g of wetting agent Disperbyk 2013 (Byk-Chemie), which is a styrene-maleic anhydride copolymer with quaternized ammonium groups.

The graphene Pure G+ consisted of graphene nano-platelets in which at least 90% (D90) had a lateral size of less than 8500 nm and a thickness of 11 nm. The C/O ratio was 93/1.

The mixture was mixed for 20 minutes at the peripheral speed of 36 m/s at a temperature of 97°C, then a granular composition was discharged with granules having a size of less than 150 µm, having the following weight content:

| | |
|---|---|
| Barium sulfate (filler): | 88% |
| Graphene nanoplatelets: | 5% |
| Binder: | 7% |

### Example 10

### Preparation of composition UP 301

4250 g of iron oxide red pigment (Bayferrox 130 of Lanxess) and 6.5 g of graphene Pure G+ of Directa Plus S.p.A. were introduced in the turbomixer described above with 743.5 g of wetting agent Disperbyk 180 (Byk-Chemie), which is an alkylolammonium salt of a copolymer with acidic groups.

The graphene Pure G+ consisted of graphene nano-platelets in which at least 90% (D90) had a lateral size of less than 8670 nm and a thickness of 14 nm. The C/O ratio was 90/1.

The mixture was mixed for 20 minutes at the peripheral speed of 36 m/s at a temperature of 120°C, then a granular composition was discharged with granules having a size of less than 2000 µm, having the following weight content:

| | |
|---|---|
| Iron oxide (pigment): | 85% |
| Graphene nanoplatelets: | 0.13% |
| Binder: | 14.87% |

### Example 11

### Preparation of composition UP 302

4250 g of iron oxide red pigment (Bayferrox 130 of Lanxess) and 31.5 g of graphene Pure G+ of Directa Plus S.p.A. were introduced in the turbomixer described above with 718.5 g of wetting agent Disperbyk 180 (Byk-Chemie), which is an alkylolammonium salt of a copolymer with acidic groups.

The graphene Pure G+ consisted of graphene nano-platelets in which at least 90% (D90) had a lateral size of less than 7980 nm and a thickness of 13 nm. The C/O ratio was 130/1.

The mixture was mixed for 20 minutes at the peripheral speed of 36 m/s at a temperature of 120°C, then a granular composition was discharged with granules having a size of less than 2000 µm, having the following weight content:

| | |
|---|---|
| Iron oxide (pigment): | 85% |
| Graphene nanoplatelets: | 0.63% |
| Binder: | 14.37% |

### Example 12

### Preparation of composition UP 201

3900 g of iron oxide yellow transparent pigment (Sicotan Yellow L1916 of BASF) and 12.5 g of graphene Pure G+ of Directa Plus S.p.A. were introduced in the turbomixer described above with 1087.5 g of wetting agent Disperbyk 180 (Byk-Chemie), which is an alkylolammonium salt of a copolymer with acidic groups.

The graphene Pure G+ consisted of graphene nano-platelets in which at least 90% (D90) had a lateral size of less than 10100 nm and a thickness of 15 nm. The C/O ratio was 130/1.

The mixture was mixed for 25 minutes at the peripheral speed of 36 m/s at a temperature of 110°C, then a granular composition was discharged with granules having a size of less than 2000 µm, having the following weight content:

| | |
|---|---|
| Iron oxide (pigment): | 78% |
| Graphene nanoplatelets: | 0.25% |
| Binder: | 21.75% |

### Example 13

### Preparation of composition UP 202

3800 g of iron oxide yellow transparent pigment (Sicotan Yellow L1916 of BASF) and 62.5 g of graphene Pure G+ of Directa Plus S.p.A. were introduced in the turbomixer described above with 1137.5 g of wetting agent Disperbyk 180 (Byk-Chemie), which is an alkylolammonium salt of a copolymer with acidic groups.

The graphene Pure G+ consisted of graphene nano-platelets in which at least 90% (D90) had a lateral size of less than 9170 nm and a thickness of 19 nm. The C/O ratio was 100/1.

The mixture was mixed for 25 minutes at the peripheral speed of 36 m/s at a temperature of 120°C, then a granular composition was discharged with granules having a size of less than 2000 µm, having the following weight content:

| | |
|---|---|
| Iron oxide (pigment): | 76% |
| Graphene nanoplatelets: | 1.25% |
| Binder: | 22.75% |

### Example 14

### Preparation of dispersions in water

The compositions of Examples 2, 4, 5, 6, 8 and 9 were used to prepare dispersions in deionized water containing 75 wt% of the composition and 0.5 wt% of the wetting and dispersing agent Edaplan 490, which is an APEO-free and VOC-free non-ionic surfactant. A disperser Dispermat CV of BYK equipped with cowless blades 20-40 mm rotated at 4000 rpm for 4 minutes was used. Wetting of the composition was excellent, no solid agglomerates were formed. The dispersions were stored at 40°C for 7 days without settling and without forming gels.

The dispersion were pastes suitable to be used for the preparation of anti-corrosion paints.

### Example 15

### Preparation of a water-based anti-corrosion paint.

The dispersion in water of the composition CP 708 of Example 8, prepared as described in Example 14, was used to prepare a water-based anti-corrosion paint having the composition described in Table 1 below. The paint was prepared by mixing the ingredients in a container. The ingredients were added to the container one at a time. In the case of components that are not stable in water, such as organic molecules, organic solvents or anti-corrosion additives, the components are first pre-dispersed in water and then added to the final matrix gradually to prevent coagulation.

**Table 1**

| **Ingredient** | **Weight %** | **Commercial name** | **Function** |
|---|---|---|---|
| Acrylic dispersion | 70 | Alberdingk AC2420 | Binder |
| Dispersion of CP708 | 18 | - | Filler composition |
| Water | 6.7 | - | |
| Dipropylene glycol methyl ether | 2.5 | Dowanol DPM | Solvent |
| Other ingredients (corrosion inhibitor, anti-foaming agent, neutralizing agent, rheology modifier) | 2.8 | | |

### Example 16

### Preparation of a water-based anti-corrosion paint.

The dispersion in water of the composition CP 709 of Example 9, prepared as described in Example 14, was used to prepare a water-based anti-corrosion paint having the composition described in Table 2 below. The paint was prepared by mixing the ingredients as described in Example 15.

**Table 2**

| **Ingredient** | **Weight %** | **Commercial name** | **Function** |
|---|---|---|---|
| Acrylic dispersion | 70 | Alberdingk AC2420 | Binder |
| Dispersion of CP709 | 18 | - | Filler composition |
| Water | 6.7 | - | |
| Dipropylene glycol methyl ether | 2.5 | Dowanol DPM | Solvent |
| Other ingredients (corrosion inhibitor, anti-foaming agent, neutralizing agent, rheology modifier) | 2.8 | | |

### Example 17 (Comparison)

### Preparation of a water-based anti-corrosion paint.

A dispersion in water of barium sulfate alone, not formulated as a granular composition of the invention for comparison purposes but prepared as described in Example 14, was used to prepare a water-based anti-corrosion paint having the composition described in Table 3 below. The paint was prepared by mixing the ingredients as described in Example 15.

**Table 3**

| **Ingredient** | **Weight %** | **Commercial name** | **Function** |
|---|---|---|---|
| Acrylic dispersion | 70 | Alberdingk AC2420 | Binder |
| Water dispersion of Barium sulfate alone | 18 | - | Filler |
| Water | 6.7 | - | |
| Dipropylene glycol methyl ether | 2.5 | Dowanol DPM | Solvent |
| Other ingredients (corrosion | 2.8 | | |
| inhibitor, anti-foaming agent, neutralizing agent, rheology modifier) | | | |

### Example 18

### Testing of a water-based anti-corrosion paints.

The paint was used to prepare test pieces according to DIN EN ISO 1513.

Rounded steel panels of 5.5 x 15 cm with a single perforation were coated with two layers of paint, each having a thickness of 200 µm.

The panels were then dried for 72 hours at 20°C, humidity 55%.

### Test on the sample after application of a first layer of paint

A scribe mark 2 mm wide was made on the layer of paint, as required by the standard method DIN EN ISO 17872 for corrosion testing. The edges and the back of the panels were then masked with adhesive tape Tesa 4124 Ultra Strong. Corrosion tests according to DIN EN ISO 9227 (Salt Fog Tests) were then carried out at 40±2°C, humidity 80±5%.

After 500 hours of exposure to salt fog, the panels were scratched at the mark made before the test. It was then evaluated how much the infiltration of the salt fog had spread by measuring how much coating detached from the surface of the sample. To be sure that the detachment occurred due to the infiltration of saline fog, after making the incision on the panel, the sample was rubbed to evaluate the correct adhesion of the coating. In the samples of this example none of the three showed signs of detachment caused by a low adhesion of the coating on the support.

The data of Table 4 show that the replacement of barium sulfate with compositions CP 708 and 709 increased the resistance to infiltration by 48% and 46%, respectively.

**Table 4**

| Assessment of the size of infiltration on single layer of 200 µm | | |
|---|---|---|
| Sample | Size of infiltration | % of improvement |
| BaSO₄ (Fig. 2) | 52 mm | |
| CP708 (Fig. 3) | 27 mm | 48 |
| CP709 (Fig. 4) | 28 mm | 46 |

### Test on the sample after application of a second layer of paint

A second series of samples, made with the double coating layer and treatred with the same salt fog test after 500 hours, gave the following results, reported on Table 5:

**Table 5**

| Assessment of the size of infiltration on single layer of 200 µm | | |
|---|---|---|
| Sample | Size of infiltration | % of improvement |
| BaSO₄ (Fig. 5) | 17 mm | |
| CP708 (Fig. 6) | 14 mm | 17 |
| CP709 (Fig. 7) | 15 mm | 12 |

The samples made with the double coating layer did not show signs of detachment caused by low adhesion of the coating to the substrate. The data of Table 5 show that replacing barium sulfate with compositions CP708 and 709 increased the infiltration resistance by 17% and 12%, respectively.

Incorporation tests of the pre-dispersion made with compositions 708 and 709 were successful. Complete replacement of barium sulfate with the compositions of the invention significantly reduced the salt fog penetration, thereby increasing the corrosion resistance. This effect is more pronounced on samples coated with a single-layer of paints but still visible in double-layer samples.

### Example 19

### Preparation of a solvent-based anti-corrosion paint.

The composition CP 708 of Example 8 was used to prepare a solvent-based anti-corrosion paint having the composition described in Table 6 below.

The paint was prepared by mixing the ingredients The ingredients have been added to the container where the paint is mixed one at a time, as described in Example 15, but pre-dispersion of the components is not necessary as they are stable in the solvent.

**Table 6**

| **Ingredient** | **Weight %** | **Commercial name** | **Function** |
|---|---|---|---|
| Epoxy resin obtained from bisphenol A and epichloroydrin 75wt% in xylene | 18.70 | Epikote 1001 | Anti-corrosion resin |

| **CP708** | 5 | - | Filler composition |
|---|---|---|---|
| Barium sulfate | 28.78 | - | Filler |
| Zinc Phosfate | 5.02 | - | Filler, corrosion inibitor |
| Methoxybutylketone, n-butanol, aromatic hydrocarbons | 15.3 | - | Solvent |
| Other ingredients (corrosion inhibitor, anti-foaming agent, neutralizing agent, rheology modifier) | 27.20 | | |

**Table 7**

| **Ingredient** | **Weight %** | **Commercial name** | **Function** |
|---|---|---|---|
| Epoxy resin obtained from bisphenol A and epichloroydrin 75wt% in xylene | 18.70 | Epikote 1001 | Anti-corrosion resin |

| **CP708** | 5 | - | Filler composition |
|---|---|---|---|
| Barium sulfate | 23.78 | - | Filler |
| Zinc Phosfate | 10.02 | - | Filler, corrosion inibitor |
| Methoxybutylketone, n-butanol, aromatic hydrocarbons | 15.3 | - | Solvent |
| Other ingredients (corrosion inhibitor, anti-foaming agent, neutralizing agent, rheology modifier) | 27.20 | | |

**Table 8**

| **Ingredient** | **Weight %** | **Commercial name** | **Function** |
|---|---|---|---|
| Epoxy resin obtained from bisphenol A and epichloroydrin 75wt% in xylene | 18.70 | Epikote 1001 | Anti-corrosion resin |

| **CP709** | 5 | - | Filler composition |
|---|---|---|---|
| Barium sulfate | 28.78 | - | Filler |
| Zinc Phosfate | 5.02 | - | Filler, corrosion inibitor |
| Methoxybutylketone, n-butanol, aromatic hydrocarbons | 15.3 | - | Solvent |
| Other ingredients (corrosion inhibitor, anti-foaming agent, neutralizing agent, rheology modifier) | 27.20 | | |

**Table 9**

| **Ingredient** | **Weight %** | **Commercial name** | **Function** |
|---|---|---|---|
| Epoxy resin obtained from bisphenol A and epichloroydrin 75wt% in xylene | 18.70 | Epikote 1001 | Anti-corrosion resin |

| **CP709** | 5 | - | Filler composition? |
|---|---|---|---|
| Barium sulfate | 23.78 | - | Filler |
| Zinc Phosfate | 10.02 | - | Filler, corrosion inibitor |
| Methoxybutylketone, n-butanol, aromatic hydrocarbons | 15.3 | - | Solvent |
| Other ingredients (corrosion inhibitor, anti-foaming agent, | 27.20 | | |
| neutralizing agent, rheology modifier) | | | |

**Table 10 (Comparison) REFERENCE COATING**

| **Ingredient** | **Weight %** | **Commercial name** | **Function** |
|---|---|---|---|
| Epoxy resin obtained from bisphenol A and epichloroydrin 75wt% in xylene | 18.70 | Epikote 1001 | Anti-corrosion resin |
| Barium sulfate | 28.78 | - | Filler |
| Zinc Phosfate | 10.02 | - | Filler, corrosion inhibitor |
| Methoxybutylketone, n-butanol, aromatic hydrocarbons | 15.3 | - | Solvent |
| Other ingredients (corrosion inhibitor, anti-foaming agent, neutralizing agent, rheology modifier) | 27.20 | | |

The Reference coating of Table 10 is a standard anticorrosion solvent-based formulation. The comparison was made modifying this standard composition by substituting one of the two inorganic fillers with compositions CP708 and CP709. One comparison was made by substituting part of the inorganic filler BaSO₄ with CP708 (Table 7) or CP709 (Table 9). The other comparison was made by substituting part of the inorganic corrosion inhibitor with CP708 (Table 6) and CP709 (Table8).

The evaluation of the corrosion resistance was performed according to DIN EN ISO 9227 as described in Example 18, with the difference that for these specimens the test lasted 900 hours. The data shown in Table 9 show that replacing 5 parts per 100 of zinc phosphate with compositions CP708 and CP 709 increased the infiltration resistance by 42% and 58%, respectively.

The tests of incorporation of compositions CP 708 and CP 709 directly into the final paint were successful. The replacement of barium sulfate with the compositions of the invention significantly reduces salt fog penetration while increasing corrosion resistance. The effect is more pronounced in the sample with CP 708 but still visible even with CP 709.

**Table 9**

| Assessment of the size of infiltration on double layer of 400 µm | | |
|---|---|---|
| Sample | Size of infiltration | % of improvement |
| BaSO₄ (Fig. 8) | 73 mm | |
| CP708 (Fig. 9) | 45 mm | 39 |
| CP709 (Fig. 10) | 71 mm | 4 |

## Claims

1. Granular composition comprising:
a) from 20 to 95% by weight of a particulate material selected from pigments and fillers;
b) from 0.02 to 50% by weight of graphene nano-platelets;
c) from 0.5 to 60% by weight of a binder;
wherein at least 90% of said graphene nano-platelets have a lateral dimension (x, y) from 50 to 20000 nm and a thickness (z) from 1 to 50 nm and a C/O ratio ≥ 40:1.

2. Granular composition according to claim 1, **characterized by** comprising granules having a particle size of from 50 to 4000 µm, measured with a Digital Electromagnetic Sieve Shaker Filtra^{®} Vibration mod. FTL0200.

3. Granular composition according to claim 1 or 2, **characterized in that** said fillers are selected from the group consisting of calcium carbonate, kaolin, mica, talc, silica, barium sulphate, and any combination thereof.

4. Granular composition according to any claim 1 - 3, **characterized in that** said binder is a wetting and dispersing agent.

5. Granular composition according to any claim 1 - 4, **characterized in that** said binder is a wetting and dispersing agent selected from the group consisting of:
Polyurethane oligomers and polyurethane polymers having a content of modified polyurethane of 100%;
Non-ionic surfactants, including fatty acids ethoxylates, alcohol ethoxhylates and ethoxylated sorbitan esters, preferably not containing alkylphenol ethoxylates (APEO) and volatile organic compounds (VOC), including sorbitan monooleate;
Anionic surfactants, preferably not containing alkylphenol ethoxylates (APEO) and volatile organic compounds (VOC); including sodium polynaphthylmethane sulphonate, Polymers with oxirane, sodium polyphosphates, sodium salts of polyacrylic acid;
Phosphoric acid esters and their salts, including 6 EO and 9 EO tridecyl phosphoric esters;
Aldehyde and ketone resins;
Epoxidized soybean oils;
Polyethers modified with ester groups of phosphoric acid and their salts;
Polyesters modified with fatty acids;
Polymers and copolymers with pigment-affinic groups, including modified polyether with groups of high pigment affinity;
2,5-Furandione, telomer with 1, 1'-(1,1-dimethyl-3-methylene-1,3-propanediyl)bis(benzene) and ethenylbenzene, 3-(dimethylamino)propyl imide, imide with polyethylenepolypropylene glycol 2-aminopropyl Me ether, 2-[(C10-16-alkyloxy)methyl]oxirane-quaternized, benzoates (salts);
Sodium polycarboxylate;
Mixture of 5-chloro-2-methyl-2H-isothiazol-3-one with 2-methyl-2H-isothiazol-3-one (CAS N° 55965-84-9).

6. Method for the preparation of a granular composition comprising:
a) from 20 to 95% by weight of a particulate material selected from pigments and fillers;
b) from 0.02 to 50% by weight of graphene nano-platelets having a lateral dimension (x, y) from 50 to 20000 nm, a thickness (z) from 1 to 50 nm, and a C/O ratio ≥ 40:1;
c) from 0.5 to 60% by weight of a binder;
wherein said particulate material, said graphene nano-platelets and said binder are mixed in a turbomixer apparatus provided with at least one impeller with blades rotating at a peripheral speed from 4 to 50 m/s, said method being carried out at a temperature from 20 to 150°C.

7. Method according to claim 6, **characterized in that** said turbomixer apparatus comprises a rotating shaft equipped with from 1 to 7 impellers mounted in series on said rotating shaft, and a heating and/or cooling jacket to control the temperature.

8. Method according to claim 6 or 7, **characterized in that** it is carried out for a total time comprised between 5 and 60 minutes.

9. Dispersion of the granular composition of any claim 1 - 5, in a liquid selected from water and an organic solvent.

10. Use of the granular composition of any claim 1 - 5, or of the dispersion of claim 8, to prepare a paint, a varnish or an ink.

11. Paint comprising the granular composition of any claim 1-5.
